# EUROPÄISCHE PATENTSCHRIFT

(11) **EP 3 331 720 B1**
(45) Veröffentlichungstag und Bekanntmachung des Hinweises auf die Patenterteilung: **14.10.2020**
(21) Anmeldenummer: 16750430.7
(22) Anmeldetag: 04.08.2016
(51) Int. Cl.: H02J 7/02, H02J 7/34, B60L 53/63

(54) **ELEKTROFAHRZEUG-LADESTATION UND VERFAHREN ZUM STEUERN EINER ELEKTROFAHRZEUG-LADESTATION**
ELECTRIC VEHICLE CHARGING STATION AND ITS CONTROL METHOD
STATION DE RECHARGE POUR VEHICULE ELECTRIQUE ET SA METHODE DE COMMANDE

(30) Priorität: 04.08.2015 DE 102015112752
(43) Veröffentlichungstag der Anmeldung: 13.06.2018
(73) Patentinhaber: Wobben Properties GmbH, 26607 Aurich (DE)
(72) Erfinder: BEEKMANN, Alfred, 26639 Wiesmoor (DE)
(74) Vertreter: Eisenführ Speiser
(86) Internationale Anmeldenummer: PCT/EP2016/068635
(87) Internationale Veröffentlichungsnummer: WO 2017/021488

(56) Entgegenhaltungen:
- EP-A1- 2 875 985
- DE-A1-102009 046 422
- DE-A1-102010 062 362
- US-A1- 2011 245 987

## Beschreibung

Die vorliegende Erfindung betrifft eine Elektrofahrzeug-Ladestation und ein Verfahren zum Steuern einer Elektrofahrzeug-Ladestation.

Ladestationen für Elektrofahrzeuge sind hinlänglich bekannt und verfügen typischerweise über ein Kabel mit einem Stecker, welcher in eine Buchse in oder an dem Elektrofahrzeug eingeführt wird, um einen Energiespeicher in oder an den Elektrofahrzeug aufzuladen.

Eine effiziente und schnelle Aufladung der Energiespeicher der Elektrofahrzeuge ist ein wesentlicher Faktor für den Erfolg der Elektrofahrzeuge.

In der prioritätsbegründenden Patentanmeldung hat das Deutsche Patent- und Markenamt die folgenden Dokumente recherchiert: EP 2 875 985 A1, EP 2 647 522 A1, EP 2 875 986 A1, US 2013/0057211 A1, US 2015/0061569 A1, DE 10 2009 046 422 A1, DE 10 2010 062 362 A1.

Es ist daher eine Aufgabe der vorliegenden Erfindung, eine Ladestation für Elektrofahrzeuge vorzusehen, welche eine effiziente und schnelle Aufladung der Elektrofahrzeuge ermöglicht.

Diese Aufgabe wird durch eine Elektrofahrzeug-Ladestation nach Anspruch 1 sowie durch ein Verfahren zum Steuern einer Elektrofahrzeug-Ladestation nach Anspruch 3 gelöst.

Somit wird eine Elektrofahrzeug-Ladestation mit einer Schnittstelle, über welche die Ladestation Energie mit einem elektrischen Energieversorgungsnetz empfängt, einem Energiezwischenspeicher zum Zwischenspeichern von über die Schnittstelle aus dem elektrischen Energieversorgungsnetz übertragene oder erhaltene Energie, einer Mehrzahl von Ausgangsanschlüssen zum Aufladen von Elektrofahrzeugen und einer Steuereinheit zum Steuern der Energiezwischenspeicherung in dem Energiezwischenspeicher und zum Steuern der Abgabe von Energie über die Ausgangsanschlüsse vorgesehen. Die Steuereinheit ist dazu ausgestaltet, Energie aus dem Energiezwischenspeicher an die Ausgangsanschlüsse weiterzuleiten, wenn die an den Ausgangsanschlüssen benötigte Energie nicht vollständig über die Schnittstelle von dem elektrischen Energieversorgungsnetz zur Verfügung gestellt werden kann.

Gemäß einem Aspekt der vorliegenden Erfindung ist die Steuereinheit dazu ausgestaltet, in Abhängigkeit von einem Fehler in dem Energieversorgungsnetz eine Energieaufnahme aus dem Energieversorgungsnetz durch den Zwischenspeicher oder eine Energieabgabe aus dem Zwischenspeicher in das Energieversorgungsnetz zu initiieren.

Die Elektrofahrzeug-Ladestation weist einen Energiezwischenspeicher auf. Dieser Zwischenspeicher kann mit Energie aus einem Energieversorgungsnetz aufgeladen werden. Wenn beispielsweise keine oder nur sehr wenige Aufladung von Elektrofahrzeugen stattfindet, kann der Zwischenspeicher aufgeladen werden. Die Ladestation kann beispielsweise in Form eines Containers oder Smart Containers vorgesehen sein und kann mit einem Energieversorgungsnetz gekoppelt werden. Ferner kann die Ladestation / der Container über eine Mehrzahl von Kabeln mit entsprechenden Steckern verfügen, so dass mehrere Elektrofahrzeuge gleichzeitig aufgeladen werden können. Insbesondere wenn viele Elektrofahrzeuge gleichzeitig aufgeladen werden sollen, dann kann es vorkommen, dass die benötigte Energiemenge nicht über das Energieversorgungsnetz, an welches der Container bzw. die Ladestation angeschlossen ist, geliefert werden kann. In solchen Fällen kann auf den sich in dem Container befindlichen oder mit dem Container gekoppelten Energiezwischenspeicher zurückgegriffen werden. Hierbei kann die in dem Energiezwischenspeicher befindliche Energie verwendet werden, um die an die Ladestation angeschlossenen Elektrofahrzeuge zumindest teilweise aufzuladen.

Die Erfindung kommt insbesondere zum Tragen, wenn die von den an der Ladestation angeschlossenen Elektrofahrzeugen benötigte Energiemenge nicht über die Schnittstelle zwischen dem Energieversorgungsnetz und der Ladestation übertragen werden kann. Wenn beispielsweise ein Elektrofahrzeug zwischen 50 und 70 kW benötigt, dann benötigen bereits 10 Elektrofahrzeuge für eine Schnellladung 500 bis 700 kW.

Der sich in der Ladestation bzw. in dem Ladecontainer befindliche Energiezwischenspeicher kann auch zum Zwischenspeichern von Energie aus dem elektrischen Energieversorgungsnetz verwendet werden, so dass die Ladestation bzw. der Ladecontainer netzstützend tätig werden kann. Dies ist insbesondere in einem Fehlerfall im elektrischen Energieversorgungsnetz notwendig bzw. vorteilhaft.

Gemäß einem Aspekt der vorliegenden Erfindung kann der Zwischenspeicher in der erfindungsgemäßen Ladestation zur Stützung des Energieversorgungsnetzes verwendet werden. Der Zwischenspeicher kann somit als ein Puffer im Fall eines Netzfehlers zwischen den Elektroautos und dem Energieversorgungsnetz fest betrieben werden. Ferner kann der Zwischenspeicher bzw. die darin gespeicherte Energie zur Netzschützung zum Beispiel bei einer Überfrequenz oder einer Unterfrequenz eingesetzt werden, das heißt falls ein Fehler im Energieversorgungsnetz auftritt und die Netzfrequenz oberhalb oder unterhalb der Nennfrequenz ist.Eine Überfrequenz stellt eine Netzfrequenz dar, die höher als die Soll-Netzfrequenz ist. Eine Unterfrequenz stellt eine Netzfrequenz dar, die geringer als die Soll-Netzfrequenz ist.

Weitere Ausgestaltungen der Erfindung sind Gegenstand der Unteransprüche.

Vorteile und Ausführungsbeispiele der Erfindung werden nachstehend unter Bezugnahme auf die Zeichnung näher erläutert.
- Fig. 1: zeigt eine schematische Darstellung einer Ladestation gemäß der Erfindung, und
- Fig. 2: zeigt ein Blockschaltbild einer Umgebung einer Mehrzahl von Ladestationen gemäß der Erfindung.

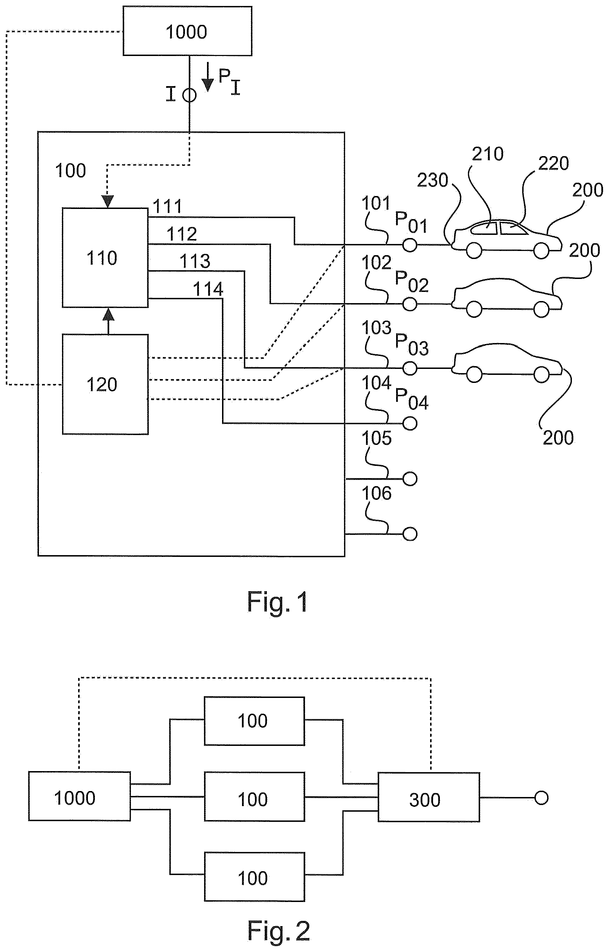

Fig. 1 zeigt eine schematische Darstellung einer Elektrofahrzeug-Ladestation gemäß der Erfindung. Eine Ladestation oder ein Ladecontainer 100 für Elektrofahrzeuge 200 ist über eine Schnittstelle I an ein elektrisches Energieversorgungsnetzwerk 1000 angeschlossen.

Über die Schnittstelle I kann eine Leistung P_{I} von dem elektrischen Energieversorgungsnetz an die Ladestation übertragen werden. Die Ladestation 100 weist einen Energiezwischenspeicher 110 und eine Steuereinheit 120 auf. Ferner weist die Ladestation 100 eine Mehrzahl von Ladeanschlüssen 101 - 106 auf. Die Anzahl der Ladeanschlüsse kann variieren. Über jeden der Ladeanschlüsse 101 - 106 kann eine elektrische Leistung P₀₁ - P₀₆ übertragen werden. An die Anschlüsse 101 - 106 kann optional jeweils ein Elektrofahrzeug 200 angeschlossen werden. Die Elektrofahrzeuge 200 weisen einen wiederaufladbaren Energiespeicher 210 (z. B. einen Akkumulator), eine Steuereinheit 220 und eine Schnittstelle 230 auf. Über die Schnittstelle 230 kann das Elektrofahrzeug 200 an einen der Anschlüsse 101 - 106 angeschlossen werden, um elektrische Energie von der Ladestation 100 in den Speicher 210 zu übertragen.

Gemäß der Erfindung weist die Ladestation bzw. der Ladecontainer 100 einen Energiezwischenspeicher 110 auf. Dieser Zwischenspeicher 110 kann optional so dimensioniert werden, dass die darin gespeicherte Energie ausreichen kann, um eine Mehrzahl von Elektrofahrzeugen 200 aufzuladen. Die Elektrofahrzeuge 200 können somit über die in dem Energiezwischenspeicher 110 gespeicherte Energie aufgeladen werden. Alternativ dazu kann die für die Aufladung der Elektrofahrzeuge 200 benötigte Energie direkt von dem elektrischen Energieversorgungsnetz 1000 mittels der Ladestation 100 zur Verfügung gestellt werden.

Wenn jedoch die Anzahl der Elektrofahrzeuge 200, welche gleichzeitig an der Ladestation 100 aufgeladen werden sollen, zu hoch ist und die von dem elektrischen Energieversorgungsnetz 1000 zur Verfügung gestellte Energie nicht ausreicht für alle Elektrofahrzeuge 200, dann kann zur Aufladung der Elektrofahrzeuge auf die in dem Zwischenspeicher 110 gespeicherte Energie zurückgegriffen werden.

Damit kann eine effektive und schnelle Aufladung auch einer Mehrzahl von Elektrofahrzeugen gleichzeitig an der Ladestation bzw. dem Ladecontainer sichergestellt werden.

Die Steuereinheit 120 kann auch mit dem elektrischen Energieversorgungsnetz 1000 gekoppelt sein, um Informationen von dem elektrischen Energieversorgungsnetz 1000 zu erhalten. Insbesondere in einem Fehlerfall in dem Energieversorgungsnetz 1000 kann die Steuereinheit 120 die Aufladung des Energiezwischenspeichers 110 steuern. Wenn beispielsweise zu viel Energie in dem Energieversorgungsnetz 100 vorhanden ist, dann kann Energie aus dem elektrischen Energieversorgungsnetz 1000 in dem Energiezwischenspeicher 110 gespeichert werden. Wenn beispielweise nicht ausreichend Energie in dem elektrischen Energieversorgungsnetz 1000 vorhanden ist, dann kann Energie aus dem Energiezwischenspeicher 110 an das elektrische Energieversorgungsnetz übertragen werden.

Elektrofahrzeuge können Kraftfahrzeuge (wie Autos, Lastkraftwagen), Motorräder, Fahrräder, Boote, Flugzeuge etc. darstellen.

Ein Fehler in dem Energieversorgungsnetz 1000 kann eine Über-/Unter-Spannung oder eine Über-/Unter-Frequenz darstellen.

Gemäß der Erfindung kann die Ladestation mit dem Energiezwischenspeicher 110 zur Netzstützung verwendet werden.

Fig. 2 zeigt ein Blockschaltbild einer Umgebung einer Mehrzahl von Ladestationen gemäß der Erfindung. Eine Mehrzahl von Ladestationen 100 ist sowohl mit dem Energieversorgungsnetzwerk 1000 als auch mit einer zentralen Steuereinheit 300 gekoppelt. Die zentrale Steuereinheit 300 kann die Netzspannung und/oder Netzfrequenz in dem Energieversorgungsnetzwerk 1000 überwachen. Falls es zu einem Fehler in dem Energieversorgungsnetzwerk kommt, das heißt wenn die erfasste Spannung von der Soll-Netzspannung abweicht und/oder wenn die Netzfrequenz von der Soll-Nennnetzfrequenz um einen Toleranzbereich abweicht, dann kann die zentrale Steuereinheit 300 in den Betrieb der Ladestationen 100 eingreifen. Dies kann insbesondere erfolgen, um zu einer Netzstützung beizutragen.

Wenn die Netzfrequenz über einen ersten Grenzwert ansteigt, dann kann die zentrale Steuereinheit 300 die Ladestationen 100 so ansteuern, dass Energie aus dem Versorgungsnetzwerk in die Zwischenspeicher der Ladestationen abgegeben wird. Die Ladestationen nehmen somit überschüssige Energie aus dem Versorgungsnetzwerk auf, z. B. um die Netzfrequenz stablisieren zu können. Wenn die Netzfrequenz einen zweiten Grenzwert unterschreitet, dann kann Energie aus den Zwischenspeichern der Ladestationen entnommen werden und an das elektrische Energieversorgungsnetz abgegeben werden.

Gemäß der Erfindung können die Elektroladestationen einen Auflademodus sowie einen Entlademodus aufweisen. Während des Auflademodus kann beispielsweise Energie aus dem Energieversorgungsnetz bezogen werden und an die angeschlossenen Elektrofahrzeuge ausgegeben werden. In einem Entlademodus kann Energie aus dem Zwischenspeicher an das elektrische Energieversorgungsnetz abgegeben werden.

Gemäß einem Aspekt der vorliegenden Erfindungen kann eine Mindestaufladung der Zwischenspeicher vorgesehen werden, welche in dem Entlademodus nicht unterschritten wird, um sicherzustellen, dass der Zwischenspeicher Energie an die angeschlossenen Ladestationen abgeben kann, wenn nicht ausreichend Energie über den Anschluss an das elektrische Netz zur Aufladung der angeschlossenen Elektroautos vorgesehen werden kann.

Gemäß der Erfindung kann der Zwischenspeicher auf der Niederspannungsebene (1 bis 20 kV) angeschlossen werden.

Die Ladestationen gemäß der Erfindung können somit aktiv in die Stützung des Netzes eingreifen. Wenn eine Mehrzahl von Ladestationen vorgesehen sind, welche geografisch verteilt sind, dann kann die kumulierte Speichermöglichkeit der Zwischenspeicher ausreichend groß sein, um sich positiv bei der Netzstützung bemerkbar zu machen.

## Patentansprüche

1. Elektrofahrzeug-Ladestation, mit
einer Schnittstelle (I), über welche die Ladestation Energie von einem elektrischen Energieversorgungsnetzwerk (1000) empfängt,
einem Energiezwischenspeicher (110) zum Zwischenspeichern von über die Schnittstelle (I) aus dem elektrischen Energieversorgungsnetz (1000) übertragener oder erhaltener Energie,
einer Mehrzahl von Ausgangsanschlüssen (101 - 106) zur Aufladung von Elektrofahrzeugen, und
einer Steuereinheit (120) zum Steuern der Energiezwischenspeicherung in dem Energiezwischenspeicher (110) und zum Steuern der Abgabe von Energie über die Ausgangsanschlüsse (101 - 106),
wobei die Steuereinheit (120) in einer ersten Betriebsart dazu ausgestaltet ist, Elektrofahrzeuge, die an einen der Mehrzahl von Ausgangsanschlüssen angeschlossen sind, mittels Energie, die über die Schnittstelle (I) empfangen wird, aufzuladen,
wobei die Steuereinheit (120) in einer zweiten Betriebsart dazu ausgestaltet ist, Energie aus dem Energiezwischenspeicher (110) zusätzlich an die Ausgangsanschlüsse (101 - 106) weiterzuleiten, wenn die an den Ausgangsanschlüssen (101 - 106) benötigte Energie nicht vollständig über die Schnittstelle (I) von dem elektrischen Energieversorgungsnetz (1000) zur Verfügung gestellt werden kann, und
die Steuereinheit (120) in einer dritten Betriebsart dazu ausgestaltet ist, in Abhängigkeit von einem ersten Fehler in dem Energieversorgungsnetzwerk (1000), nämlich wenn zu viel Energie in dem Energieversorgungsnetzwerk (1000) vorhanden ist, eine Energieaufnahme aus dem Energieversorgungsnetzwerk (1000) durch den Energiezwischenspeicher (110) zu initiieren,
wobei die Steuereinheit (120) in einer vierten Betriebsart dazu ausgestaltet ist, in Abhängigkeit von einem zweiten Fehler in dem Energieversorgungsnetzwerk (1000), nämlich wenn nicht ausreichend Energie in dem Energieversorgungsnetzwerk (1000) vorhanden ist, eine Energieabgabe aus dem Energiezwischenspeicher (110) in das Energieversorgungsnetz (1000) zu initiieren.

2. Elektrofahrzeug-Ladestation nach Anspruch 1, wobei der Energiezwischenspeicher (110) so dimensioniert ist, dass die darin speicherbare Energie ausreicht, um eine Mehrzahl von Elektrofahrzeugen (200) aufzuladen.

3. Elektrofahrzeug-Ladestation nach Anspruch 1 oder 2, wobei eine Mindestaufladunq des Energiezwischenspeichers (110) vorgesehen ist, welche in der vierten Betriebsart nicht unterschritten wird.

4. Verfahren zum Steuern mindestens einer Elektrofahrzeug-Ladestation, mit den Schritten:
- Empfangen von Energie von einem elektrischen Energieversorgungsnetz (1000) über eine Schnittstelle (I),
- Zwischenspeichern von über die Schnittstelle (I) aus dem elektrischen Energieversorgungsnetz (1000) übertragener oder erhaltener Energie in einem Energiezwischenspeicher (110),
- Aufladen von Elektrofahrzeugen an einer Mehrzahl von Ausgangsanschlüssen (101-106) in einer ersten Betriebsart mittels Energie, die über die Schnittstelle (I) empfangen wird,
- Steuern der Energiezwischenspeicherung in den Energiezwischenspeicher (110) mittels einer Steuereinheit (120),
- Steuern der Abgabe von Energie über die Ausgangsanschlüsse (101-106) mittels der Steuereinheit (120),
- Weiterleiten von Energie aus dem Energiezwischenspeicher (110) in einer zweiten Betriebsart zusätzlich an die Ausgangsanschlüsse (101-106), wenn die an den Ausgangsanschlüssen (101-106) benötigte Energie nicht vollständig über die Schnittstelle (I) von dem elektrischen Energieversorgungsnetz (1000) zur Verfügung gestellt werden kann,
- Initiieren einer Energieaufnahme aus dem Energieversorgungsnetz (1000) durch den Zwischenspeicher (110) in einer dritten Betriebsart in Abhängigkeit von einem ersten Fehler in dem Energieversorgungsnetz (1000), nämlich wenn zu viel Energie in dem Energieversorgungsnetzwerk vorhanden ist, und
Initiieren einer Energieabgabe aus dem Zwischenspeicher (110) in das Energieversorgungsnetz (1000) in einer vierten Betriebsart in Abhängigkeit von einem zweiten Fehler, nämlich wenn nicht ausreichend Energie in dem Energieversorgungsnetzwerk vorhanden ist.

5. Verfahren nach Anspruch 4,
wobei der Energiezwischenspeicher (110) so dimensioniert ist, dass die darin speicherbare Energie ausreicht, um eine Mehrzahl von Elektrofahrzeugen (200) aufzuladen.

6. Verfahren nach Anspruch 4 oder 5,
wobei eine Mindestaufladunq des Energiezwischenspeichers (110) vorgesehen ist, welche in der vierten Betriebsart nicht unterschritten wird.

## Claims

1. An electric vehicle charging station comprising
an interface (I), by way of which the charging station receives energy from an electrical energy supply grid (1000),
an energy intermediate storage device (110) for intermediate storage of energy transmitted or received from the electrical energy supply grid (1000) by way of the interface (I),
a plurality of output connections (101-106) for charging electric vehicles, and
a control unit (120) for controlling energy intermediate storage in the energy intermediate storage device (110) and for controlling the delivery of energy by way of the output connections (101-106),
wherein the control unit (120) in a first operating mode is adapted to charge electric vehicles, which are coupled to the plurality output connections with energy received via the interface (1),
wherein the control unit (120) in a second operating mode is adapted to additionally pass energy from the energy intermediate storage device (110) to the output connections (101 -106) if the energy required at the output connections (101-106) cannot be provided completely from the electrical energy supply grid (1000) via the interface (I),
wherein the control unit (120) in a third operating mode is adapted in dependence on a first fault in the energy supply grid (1000), namely when too much energy is present in the electrical energy supply grid (1000), to initiate energy intake from the energy supply grid (1000) by the intermediate storage device (110),
wherein the control unit (120) in a fourth operating mode is adapted in dependence on a second fault in the energy supply grid (1000), namely when not sufficient energy is present in the electrical energy supply grid (1000), to initiate an energy delivery from the intermediate energy storage device (110) into the energy supply grid (1000).

2. An electric vehicle charging station according to claim 1 wherein
the energy intermediate storage device (110) is dimensioned such that the energy stored therein is sufficient to charge a plurality of electrical vehicles (200).

3. An electric vehicle charging station according to claim 1 or 2, wherein a minimum charging level of the energy intermediate storage device (110) is provided below which the energy level in the energy intermediate storage device does not drop in the fourth operating mode.

4. A method of controlling at least one electric vehicle charging station comprising the steps:
- receiving energy from an electrical energy supply grid (1000) by way of an interface (I),
- intermediate storage of energy transmitted or received from the electrical energy supply grid (1000) by way of the interface (I) in an energy intermediate storage device (110),
- charging electric vehicles at a plurality of output connections (101-106) in a first operating mode with energy received via the interface (I),
- controlling the energy intermediate storage in the energy intermediate storage device (110) by means of a control unit (120),
- controlling the delivery of energy by way of the output connections (101 -106) by means of the control unit (120),
- additionally passing energy from the energy intermediate storage device (110) in a second operating mode to the output connections (101-106) if the energy required at the output connections (101-106) cannot be made available completely by way of the interface (I) by the electrical energy supply grid (1000), and
- initiating energy intake from the energy supply grid (1000) by the intermediate storage device (110) in a third operating mode in dependence on a first fault in the energy supply grid (1000), namely when too much energy is present in the electrical energy supply grid,
- initiating energy delivery from the intermediate storage device (110) into the energy supply grid (1000) in a fourth operating in dependence on a second fault when not sufficient energy is present in the electrical supply grid (1000).

5. Method according to claim 4, wherein the energy intermediate storage device (110) is dimensioned such that the energy stored therein is sufficient to charge a plurality of electrical vehicles.

6. Method according to claim 4 or 5, wherein a minimum energy level is provided for the energy intermediate storage device (110) below which the energy level in the intermediate storage device does not drop in the fourth operating mode.

## Revendications

1. Station de charge de véhicule électrique, avec
une interface (I), par l'intermédiaire de laquelle la station de charge reçoit de l'énergie provenant d'un réseau d'alimentation en énergie (1000) électrique,
un accumulateur temporaire d'énergie (110) pour stocker de manière temporaire de l'énergie transmise ou reçue par l'intermédiaire de l'interface (I) depuis le réseau d'alimentation en énergie (1000) électrique,
une multitude de bornes de sortie (101 - 106) pour la recharge de véhicules électriques, et
une unité de commande (120) pour commander le stockage temporaire d'énergie dans l'accumulateur temporaire d'énergie (110) et pour commander la distribution d'énergie par l'intermédiaire des bornes de sortie (101 - 106),
dans laquelle l'unité de commande (120) est configurée dans un premier mode de fonctionnement pour recharger au moyen d'énergie, qui est reçue par l'intermédiaire de l'interface (I), des véhicules électriques, qui sont raccordés à une de la multitude de bornes de sortie,
dans laquelle l'unité de commande (120) est configurée dans un deuxième mode de fonctionnement pour transférer de l'énergie provenant de l'accumulateur temporaire d'énergie (110) en supplément aux bornes de sortie (101 - 106) quand l'énergie requise au niveau des bornes de sortie (101 - 106) ne peut être fournie en totalité par le réseau d'alimentation en énergie (1000) électrique par l'intermédiaire de l'interface (I), et
l'unité de commande (120) est configurée dans un troisième mode de fonctionnement pour initier une absorption d'énergie provenant du réseau d'alimentation en énergie (1000) par l'accumulateur temporaire d'énergie (110) en fonction d'une première erreur dans le réseau d'alimentation en énergie (1000), à savoir quand une quantité trop importante d'énergie est présente dans le réseau d'alimentation en énergie (1000),
dans laquelle l'unité de commande (120) est configurée dans un quatrième mode de fonctionnement pour initier une distribution d'énergie provenant de l'accumulateur temporaire d'énergie (110) dans le réseau d'alimentation en énergie (1000) en fonction d'une deuxième erreur dans le réseau d'alimentation en énergie (1000), à savoir quand une quantité insuffisante d'énergie est présente dans le réseau d'alimentation en énergie (1000).

2. Station de charge de véhicule électrique selon la revendication 1, dans laquelle l'accumulateur temporaire d'énergie (110) est dimensionné de telle sorte que l'énergie pouvant y être stockée suffit pour recharger une multitude de véhicules électriques (200).

3. Station de charge de véhicule électrique selon la revendication 1 ou 2, dans laquelle une recharge minimale de l'accumulateur temporaire d'énergie (110) est prévue, au-dessous de laquelle on ne descend pas dans le quatrième mode de fonctionnement.

4. Procédé pour commander au moins une station de charge de véhicule électrique, avec les étapes :
- de réception d'énergie provenant d'un réseau d'alimentation en énergie (1000) électrique par l'intermédiaire d'une interface (I),
- de stockage temporaire d'énergie transmise ou reçue par l'intermédiaire de l'interface (I) depuis le réseau d'alimentation en énergie (1000) électrique dans un accumulateur temporaire d'énergie (110) ;
- de recharge de véhicules électriques au niveau d'une multitude de bornes de sortie (101 - 106) dans un premier mode de fonctionnement au moyen d'énergie, qui est reçue par l'intermédiaire de l'interface (I),
- de commande du stockage temporaire d'énergie dans l'accumulateur temporaire d'énergie (110) au moyen d'une unité de commande (120),
- de commande de la distribution d'énergie par l'intermédiaire des bornes de sortie (101 - 106) au moyen de l'unité de commande (120) ;
- de transfert d'énergie provenant de l'accumulateur temporaire d'énergie (110) dans un deuxième mode de fonctionnement en supplément aux bornes de sortie (101 - 106) quand l'énergie requise au niveau des bornes de sortie (101 - 106) ne peut être totalement fournie par l'intermédiaire de l'interface (I) par le réseau d'alimentation en énergie (1000) électrique,
- d'initiation d'une absorption d'énergie provenant du réseau d'alimentation en énergie (1000) par l'accumulateur temporaire (110) dans un troisième mode de fonctionnement en fonction d'une première erreur dans le réseau d'alimentation en énergie (1000), à savoir quand une quantité trop importante d'énergie est présente dans le réseau d'alimentation en énergie, et
- d'initiation d'une distribution d'énergie provenant de l'accumulateur temporaire (110) dans le réseau d'alimentation en énergie (1000) dans un quatrième mode de fonctionnement en fonction d'une deuxième erreur, à savoir quand une quantité insuffisante d'énergie est présente dans le réseau d'alimentation en énergie.

5. Procédé selon la revendication 4,
dans lequel l'accumulateur temporaire d'énergie (110) est dimensionné de telle sorte que l'énergie pouvant y être stockée suffit pour recharger une multitude de véhicules électriques (200).

6. Procédé selon la revendication 4 ou 5,
dans lequel est prévue une recharge minimale de l'accumulateur temporaire d'énergie (110), au-dessous de laquelle on ne descend pas dans le quatrième mode de fonctionnement.
